(19) Europäisches Patentamt
European Patent Office
Office européen des brevets

(11) Veröffentlichungsnummer: **0 344 593 B1**

(12) **EUROPÄISCHE PATENTSCHRIFT**

(45) Veröffentlichungstag der Patentschrift: **15.11.95**

(51) Int. Cl.$^6$: **C08G 69/32**

(21) Anmeldenummer: **89109330.4**

(22) Anmeldetag: **24.05.89**

(54) **Verfahren zur Herstellung von Formkörpern aus einem thermoplastisch verarbeitbaren aromatischen Polyetheramid.**

(30) Priorität: **28.05.88 DE 3818209**

(43) Veröffentlichungstag der Anmeldung:
**06.12.89 Patentblatt 89/49**

(45) Bekanntmachung des Hinweises auf die Patenterteilung:
**15.11.95 Patentblatt 95/46**

(84) Benannte Vertragsstaaten:
**AT BE CH DE ES FR GB GR IT LI NL SE**

(56) Entgegenhaltungen:
**DE-A- 1 595 681**
**US-A- 4 410 684**

(73) Patentinhaber: **HOECHST AKTIENGESELL-SCHAFT**

**D-65926 Frankfurt am Main (DE)**

(72) Erfinder: **Cherdron, harald, Prof. Dr.**
**Eichenweg 40**
**D-6200 Wiesbaden (DE)**
Erfinder: **Deckers, Hellmuth, Dr**
**Autunstrasse 4**
**D-6507 Ingelheim (DE)**
Erfinder: **Herold, Friedrich, Dr**
**Thüringer Weg 57**
**D-6238 Hofheim am Taunus (DE)**
Erfinder: **Hess, Reiner, Dr**
**Lärchenstrasse 4**
**D-6200 Wiesbaden (DE)**

**Beschreibung**

Aromatische Polyamide sind bekannt für ihre ausgezeichneten thermischen, chemischen und mechanischen Eigenschaften.

Überwiegend p-verknüpfte Homopolymere wie Poly-p-phenylenterephthalamid (PPTA) aus p-Phenylendiamin (PPD) und Terephthalsäuredichlorid (TPC) zeigen zwar sehr hohe mechanische Eigenschaften, zersetzen sich jedoch vor ihrem Schmelzpunkt und müssen wegen ihrer geringen Löslichkeit in organischen Lösungsmitteln aus konzentrierter Schwefelsäure (zweistufiger Prozeß, Korrosionsprobleme) verarbeitet werden (DE-OS 2 219 703). Die Ursache liegt in dem sehr steifen Kettencharakter dieser Polymere.

Abhilfe bieten zunächst Copolymere auf Basis von PPTA, wobei zwar die Verarbeitung in organischen Lösungsmitteln, u.a. durch den Einbau von flexiblen Gruppen, erreicht wird, die Polymeren sich jedoch wie PPTA noch vor dem Schmelzpunkt zersetzen. Als Comonomere dienen hierbei beispielsweise 3,4′-Diaminodiphenylether (3,4′-ODA) bzw. 1,4-Bis-(4′-aminophenoxy)benzol (BAPOB) (EP-B 0 045 934 bzw. EP-A 0 199 090). Versuche zum Verpressen solcher Copolyamide, beispielsweise für Polymere mit 3,4′-ODA liefern zwar Formteile, erlauben jedoch nicht die Anwendung üblicher Methoden zur thermoplastischen Verarbeitung oder ein nachträgliches Verformen (JP 61/264 022-A).

Der Übergang zu Systemen aus m-Phenylendiamin (MPD) und Isophthalsäuredichlorid (IPC) führt zwar zu Polymeren mit nochmals erhöhter Löslichkeit, die Zersetzung liegt jedoch auch hier noch vor dem Schmelzpunkt (US-A 3 063 966). Verpressen dieser aromatischen Polyamide ergibt Formteile mit den gleichen Nachteilen wie oben, die mechanischen Eigenschaften liegen zudem auf relativ niedrigem Niveau (EP-A 0 198 167 und EP-A 0 200 472).

Erst der Einbau noch flexiblerer Bestandteile führt zu schmelzbaren Polyaramiden. Problematisch ist dabei der enge Spielraum zwischen thermoplastischer Verarbeitbarkeit, d.h. einem genügenden Abstand zwischen der notwendigen Verarbeitungstemperatur und der Zersetzungstemperatur, und noch hohen mechanischen Eigenschaften, da hohe Werte für den Anfangsmodul auf einer möglichst steifen Polymerstruktur basieren, also möglichst einer p-Verknüpfung. Zudem beschränkt die geforderte thermische Stabilität auf die Verwendung überwiegend aromatischer Bestandteile, da ein Einbau aliphatischer Gruppen zu einer schlechteren Temperaturbeständigkeit führt (US-A 4 072 665 und US-A 4 087 481).

Ein überwiegend aromatisches relativ flexibles und leicht zugängliches, für die Herstellung aromatischer Polyetheramide oft eingesetztes Monomer ist 2,2-Bis-(4′-aminophenoxyphenyl)-propan (BAP), das bevorzugt aus den großtechnisch verfügbaren Produkten Bisphenol A und p-Chlornitrobenzol synthetisiert wird.

Bekannt sind auch schmelzbare Polyetheramide auf Basis von IPC und BAP (US-A 3 505 288, Beispiele 3 und 4). Als nachteilig erscheint der hohe Anteil an m-Strukturen und ein entsprechend relativ niedriges Niveau der mechanischen Eigenschaften, insbesondere des Anfangsmoduls. Polymere aus TPC und BAP (Beispiel 5) werden mit einem Zersetzungspunkt von 350 °C angegeben, d.h. die Angabe eines Schmelzpunktes fehlt.

Eine Verbesserung bezüglich der Schmelzbarkeit und der mechanischen Eigenschaften wird durch Polymere aus einem aromatischen Diamin und einem aromatischen Dicarbonsäurehalogenid, vorzugsweise aber aus BAP und IPC/TPC-Mischungen erreicht (DE-A 26 36 379)

Auch Polymere aus IPC und BAP/MPD-Mischungen sind aus einer Veröffentlichung bekannt (US-A 4 410 684). Hier werden Zusammensetzungen, bei denen der Hauptteil aus MPD, d.h. aus mehr als 50 Mol-% besteht, beschrieben. Über TPC ist in dieser Veröffentlichung nichts ausgesagt.

Das Konzept der beiden letztgenannten Veröffentlichungen basiert auf dem Einbau bzw. der Verwendung von m-Strukturen, die zu niedrigeren Glastemperaturen und Anfangsmoduli führen. Es ist jedoch nicht erkannt worden, daß das Polymere aus BAP und TPC besonders wertvolle Eigenschaften aufweist.

Der Erfindung liegt die Aufgabe zugrunde, ein Verfahren zur Herstellung von Formkörpern aus thermoplastisch verarbeitbaren aromatischen Polyetheramiden zu entwickeln.

Die Erfindung betrifft ein Verfahren zur Herstellung eines Formkörpers aus einem thermoplastisch verarbeitbaren aromatischen Polyetheramid mit einer Schmelztemperatur im Bereich von 300 bis 350 °C, bei dem die Struktur aus den wiederkehrenden Einheiten der Formeln

-CO-Ar-CO-　　　(A)

und

-NH-AR-O-Ar-X-Ar-O-Ar-NH-　　　(B)

besteht, worin Ar einen zweiwertigen aromatischen Rest mit 6 C-Atomen, der unsubstituiert oder substituiert ist, bedeutet, dessen Bindungen in p-Stellung stehen und X eine 2,2-Propylidenbindung darstellt, einen Staudingerindex $[\eta]$ im Bereich von 50 bis 400 cm$^3$/g (gemessen in N-Methyl-pyrrolidon bei 25 °C) und eine Glasübergangstemperatur von über 200°C aufweist, dadurch gekennzeichnet, daß die Formgebung aus einer Schmelze erfolgt. Eine bevorzugte Ausführungsform ist in Anspruch 3 beschrieben. Die Herstellung der Polymeren kann über übliche Kondensationstechniken wie Tieftemperaturlösungs-, Feststoff-, Grenzflächen- oder Schmelzekondensation erfolgen.

Überraschenderweise lassen sich diese aromatischen Polyetheramide gut thermoplastisch verarbeiten, beispielsweise durch Verpressen zu Formteilen, Extrusion oder Spritzguß, und besitzen ein unerwartet hohes Eigenschaftsniveau.

Zur Herstellung der Polyetheramide eignen sich die folgenden Verbindungen:
Dicarbonsäurederivate der Formel

W-CO-Ar-CO-W    (A')

in der -Ar- einen zweiwertigen Rest wie oben beschrieben darstellt und W je nach der gewählten Kondensationstechnik ein Halogen, vorzugsweise Chlor, oder eine -OH- oder -OR-Gruppe, wobei R einen verzweigten oder unverzweigten aliphatischen Rest mit 1-4 C-Atomen in der Alkylgruppe oder einen aromatischen Rest bedeutet, beispielsweise Terephthalsäuredichlorid, 2-Chlor-terephthalsäuredichlorid, Terephthalsäure oder Terephthalsäurediphenylester.

Als aromatisches Diamin der Formel

H$_2$N-Ar-O-Ar-X-Ar-O-Ar-NH$_2$    (B')

in der -Ar- und -X- die oben angegebene Bedeutung haben, eignet sich vorzugsweise 2,2-Bis-(4'-aminophenoxyphenyl)-propan.

Die Kondensation wird vorteilhaft nach einem üblichen Tieftemperaturlösungsverfahren durchgeführt.

Diese Lösungskondensation des aromatischen Dicarbonsäuredichlorids mit dem aromatischen Diamin erfolgt in aprotischen, polaren Lösungsmitteln vom Amidtyp, z.B. in N,N-Dimethyl-acetamid oder insbesondere in N-Methyl-2-pyrrolidon (NMP). Gegebenenfalls können diesen Lösungsmitteln in bekannter Weise zur Erhöhung der Lösefähigkeit bzw. zur Stabilisierung der Polyetheramidlösungen Halogenidsalze der ersten und/oder zweiten Gruppe des periodischen Systems zugegeben werden. Bevorzugte Zusätze sind Calciumchlorid und/oder Lithiumchlorid. Die beschriebenen aromatischen Polyetheramide zeichnen sich allerdings durch eine hohe Löslichkeit in den obigen Lösungsmitteln des Amidtyps aus, so daß die Kondensation bevorzugt ohne Salzzusatz erfolgt. Die Ausgangsverbindungen (A') und (B') werden im allgemeinen in äquimolaren Mengen eingesetzt. Üblicherweise wird die Menge an Dicarbonsäuredichlorid so gewählt, daß die Lösungsviskosität maximal wird, d.h. je nach Monomerreinheit werden geringfügig mehr oder weniger als 100 Mol-% zugesetzt.

Die Polykondensationstemperaturen liegen zwischen 10 und 100°C. Besonders gute Ergebnisse werden bei Reaktionstemperaturen zwischen 10 und 80°C erzielt. Die Polykondensationsreaktionen werden so ausgeführt, daß nach Abschluß der Reaktion 2 bis 40, vorzugsweise 3 bis 30 Gew.-% an Polykondensat in der Lösung vorliegen. Für spezielle Anwendungen kann die Lösung bei Bedarf mit N-Methyl-2-pyrrolidon oder anderen Amidlösungsmitteln verdünnt werden.

Die Polykondensation kann in üblicher Weise z.B. durch Zugabe von monofunktionellen Verbindungen, wie Acetylchlorid, substituierten Benzoylchloriden, z.B. p-Chlorbenzoylchlorid, vorzugsweise aber Benzoylchlorid gestoppt werden, ebensogut ist die Verwendung monofunktioneller Amine, beispielsweise Anilin, N,N-Dimethyl-p-phenylendiamin oder 3-Chloranilin, zur Begrenzung der Molmasse geeignet.

Nach Beendigung der Polykondensation, d.h. wenn die Polymerlösung die zur Weiterverarbeitung erforderliche Viskosität erreicht hat, wird der entstandene und locker an das Amidlösungsmittel gebundene Halogenwasserstoff durch Zugabe basischer Substanzen neutralisiert. Geeignet sind dafür beispielsweise Lithiumhydroxyd, Galciumhydroxyd, vorzugsweise aber Calciumoxid. Danach wird der Ansatz im allgemeinen für 50 bis 120 Minuten bei 50 bis 80°C nachbehandelt, um die gewünschten physikalischen Werte der Polymeren zu erhalten. Zur Herstellung von geformten Gebilden werden die oben beschriebenen Polyamidlösungen filtriert, entgast und ir bekannter und im folgenden geschilderter Weise weiterverarbeitet.

Den Lösungen können noch geeignete Mengen an Additiven zugesetzt werden. Beispiele sind Lichtstabilisatoren, Antioxidationsmittel, Flammschutzmittel, Antistatika, Farbstoffe, Farbpigmente oder Füllstoffe.

Die Polyetheramide können durch geeignete Verfahren, wie beispielsweise Destillation, Ausfällen oder Extraktion, isoliert und dann erneut mit Lösungsmitteln des Amidtyps, eventuell unter Verwendung der beschriebenen Zusätze zur Erhöhung der Lösefähigkeit, in eine geeignete Ausformlösung überführt werden. Beispielsweise sind so salzfreie Lösungen der Polymeren erhältlich. Die direkte Verarbeitung der Kondensationslösung wird aber bevorzugt.

Zur Isolation des Polyetheramids kann die Lösung mit einem Fällungsmittel versetzt und das koagulierte Produkt abfiltriert werden. Typische Fällungsmittel sind beispielsweise Wasser, Methanol, cycloaliphatische und aromatische Verbindungen wie Cyclohexan und Toluol. Bevorzugt erfolgt die Isolation durch Zerkleinern der Polymerlösung mit einem Überschuß an Wasser in einer Schneidmühle. Die fein zerkleinerten koagulierten Polymerteilchen erleichtern die nachfolgenden Waschschritte (Entfernen des bei der Neutralisation gebildeten Salzes) und die Trocknung des Produktes (Vermeiden von Einschlüssen) nach Abfiltration. Auch eine nachträgliche Zerkleinerung erübrigt sich, da direkt ein rieselfähiges Produkt entsteht.

Außer der beschriebenen Lösungskondensation, die als leicht zugängliches Verfahren gilt, können wie bereits erwähnt, auch andere übliche Verfahren zur Herstellung von Polyamiden, wie beispielsweise Schmelze-, Feststoff- oder Grenzflächenkondensation, angewendet werden. Auch diese Verfahren beinhalten neben der Kondensation gegebenenfalls die Regelung der Molmasse, Reinigungs- oder Waschschritte sowie den Zusatz geeigneten Additive.

Die Additive können darüber hinaus auch dem isolierten Polymer bei der thermoplastischen Verarbeitung zugesetzt werden.

Die aromatischen Polyetheramide sind als überwiegend amorphe Polymere mit überraschend hohen mechanischen Eigenschaften, insbesondere einem hohen Anfangsmodul und einer hohen Glasübergangstemperatur charakterisiert. Der Staudingerindex $[\eta]$ liegt im Bereich 50 bis 400 $cm^3/g$. Die Glasübergangstemperaturen liegen im allgemeinen über 200°C, bevorzugt über 220°C und die Schmelztemperaturen im Bereich von 300 bis 350°C. Der Anfangsmodul naßgesponnener und verstreckter Fäden erreicht mindestens 5 N/tex, bevorzugt 7 N/tex. Bei unverstreckten Folien liegt er bereits über 1,5 GPa. Durch Verstreckung der Folien läßt sich dieser Wert noch deutlich erhöhen, z.B. auch über 6 GPa bei Verstreckung im Verhältnis 1:3. Der Anfangsmodul von Preßplatten liegt über 3 GPa.

Die Verarbeitung der Polyetheramide erfolgt über die Schmelze nach üblichen thermoplastischen Verarbeitungstechniken. Verpressen, Extrudieren oder Spritzgießen führt zu Formteilen, Fäden, Drähten oder Folien.

Bei der Verarbeitung über die Schmelze können Hilfsmittel wie Gleitmittel oder Schmelzestabilisatoren zugesetzt werden. Einführung von Endgruppen, z.B. durch die oben beschriebene Zugabe von monofunktionellen Verbindungen, gilt als günstig zum Erreichen einer hohen Schmelzestabilität. Auch ist es zweckmäßig, die Polymeren vor der Verarbeitung gut zu trocknen.

Bei Folien gilt überdies ein Temperschritt bei Temperaturen zwischen 200 und 400°C, bevorzugt 200 und 300°C, gebenenfalls unter Anlegen einer Spannung oder unter einer Stickstoff-Atmosphäre, als günstig zum Erreichen einer hohen Dimensionsstabilität. Bei der Herstellung verstreckter Folien erübrigt sich ein gesonderter Temperschritt.

Zum uniaxialen oder biaxialen (nacheinander oder simultan) Verstrecken können bekannte Methoden angewandt werden: Neben Verstreckung trockener Formkörper über heiße Flächen, unter IR-Strahlern oder sonstigen Wärmequellen besteht auch die Möglichkeit, Formkörper mit einem Restgehalt an Lösungsmittel und/oder Salz, auch in Lösungsmittelbädern, naß zu verstrecken. Bei ersterer Methode liegt ein Vorteil in den relativ niedrigen mindestens notwendigen Temperaturen im Bereich 200 - 300°C, bevorzugt um 250°C. Auch hier kann unter Stickstoff verstreckt werden. Auch Kombinationen aus Naß- und Trockenverstreckung sind möglich. Die Verstreckungsverhältnisse liegen im Bereich 0,5 bis 10 fach, bevorzugt bei 2-5 fach (uniaxial). Erfindungsgemäß genügen schon relativ niedrige Verstreckungsverhältnisse zum Erreichen außergewöhnlich hoher mechanischer Eigenschaften.

Die Polyetheramide gemäß der Erfindung eignen sich zur Herstellung einer Vielzahl von Formteilen wie Lagerteile, Dichtungen, Verschlüsse, Clips, elektrische Isolatoren, elektrische Stecker, Gehäuse für elektrische Teile, Karosserieteile im Kraftfahrzeugbau, Kolben, Zahnräder, Turbinenflügel, Laufräder, Fadenführungen, Steuerwellen, Bremsbeläge und Kupplungsscheiben.

Fäden, Fasern oder Pulp aus den erfindungsgemäßen Polyetheramiden können beispielsweise als Verstärkungsmaterialien für Gummi, thermoplastische Kunststoffe oder wärmehärtende Harze, zur Herstellung von Filtergeweben oder als leichter Dämmstoff verwendet werden.

Folien und Papier eignen sich als hitzebeständiges Isolationsmaterial, Folien insbesondere als Substrat für flexible Leiterplatten und für den Einsatz im Bereich der Datenverarbeitung.

Eine besondere Anwendung, bei der insbesondere der hohe Anfangsmodul als günstig gilt, besteht in der Verwendung als thermoplastischen Hochtemperatur-Matrix für Verbundwerkstoffe. Die beanspruchten Polymere eignen sich dabei sowohl in Form von Lösungen, wobei die hohe Löslichkeit die Herstellung salzfreier Lösungen erlaubt, als auch in Form von Pulver, Fäden oder Folien zur Herstellung von Prepregs

4

oder Hybridgeweben.

Die Polyetheramide gemäß der Erfindung bzw. die daraus hergestellten Formteile sind nach folgenden Test-Methoden geprüft worden:

**Staudingerindex [$\eta$]:**

Der Staudingerindex [$\eta$] ist nach Gleichung 1 definiert:

$$[\eta] = \lim_{c_2 \to 0} \frac{(\eta/\eta_1) - 1}{c_2} \qquad Gl.\ 1$$

wobei $\eta$ und $\eta_1$ die Viskositäten der Lösung bzw. des Lösungsmittels und $c_2$ die Konzentration des Polymers bedeuten. Gemessen wurde in N-Methyl-pyrrolidon bei 25 °C.

**Viskositat $\eta_o$:**

Die Viskosität $\eta_o$ wurde mit einem Rotationsviskosimeter (RV 100, Fa. Haake, Karlsruhe, Bundesrepublik Deutschland) bestimmt, angegeben ist der auf Schergefälle Null extrapolierte Wert der Kondensationslösung bei 90 °C.

**Mechanische Eigenschaften:**

Reißfestigkeit (RF), Reißdehnung (RD), Streckspannung (SS), Dehnung bei Streckspannung (DSS) (s. Tabellen 1 und 2), Anfangsmodul (AM) und Knotenfestigkeit wurden mit Hilfe von Instron Zug-Dehnungs-Geräten bei 23 °C und 50 % relativer Luftfeuchte bestimmt.

Formkörper:

Die mechanischen Eigenschaften von Formkörpern wurden an aus Pulver verpreßten Platten (∅ 6 cm, Dicke ca. 1 mm) in Anlehnung an DIN 53 455 mit Probekörpern S3A nach DIN 53 504 bestimmt.

**Thermische Eigenschaften:**

Die thermischen Daten wie Glasübergangstemperatur, Erweichungs-, Schmelz- und Zersetzungspunkt wurden nach den Methoden der Thermogravimetrie (TGA: Stickstoff, 3 K/min), der Differentialthermoanalyse (DSC: Stickstoff, 10 K/min), der thermomechanischen Analyse (TMA: TA-3000-System mit Meßkopf TMA 40 der Fa. Mettler, Greifensee, Schweiz; Stickstoff, 40 K/min, 5 mm Einspannlänge, ca. 0,25 cN/tex Wechsellast) und durch Torsionsschwingungsversuche (TSV: in Anlehnung an DIN 53 445) ermittelt.

**Beispiele**

**1)** (Herstellung) Aromatisches Polyetheramid aus 100 Mol-% Terephthalsäuredichlorid (TPC) und 100 Mol-% 2,2-Bis-(4'-aminophenoxyphenyl)-propan (BAP).

164,21 g BAP wurden unter Stickstoff in 2193 g N-Methyl-pyrrolidon gelöst und zwischen 15 und 70 °C innerhalb von ca. 60 Minuten 81,21 g TPC zugegeben. Die viskose und klare Lösung wurde noch ca. 40 Minuten lang bei 70 °C nachgerührt und dann mit 24,54 g CaO (96 %ig, d.h. im 5 %igen Überschuß) neutralisiert und weitere 30 Minuten bei 70 °C nachgerührt.

Die Lösung enthielt 8,8 % Polyetheramid und 1,9 % $CaCl_2$, das gelöste Polyetheramid zeigte einen Staudingerindex [$\eta$] von 417 cm$^3$/g und die Kondensationslösung eine Viskosität $\eta_o$ von 156 Pa•s bei 90 °C.

Die Lösung wurde filtriert und in einer Schneidmühle unter Zugabe von Wasser koaguliert und zerkleinert. Das ausgefällte Polyetheramid wurde mehrfach mit Wasser und dann mit Aceton gewaschen. Die Trocknung des rieselfähigen Polymers erfolgte bei 130 °C unter vermindertem Druck (50-80 mbar) unter leichter Stickstoff-Überleitung.

EP 0 344 593 B1

Die ausgezeichnete Löslichkeit des Polyetheramids zeigte sich bei der Bestimmung von $[\eta]$ in der sehr kleinen Huggins-Konstanten $K_H$. Der in NMP bei 25°C gefundene Wert von 0,34 für $K_H$ zeigte die gute Löslichkeit des Polymers. Bezüglich der thermischen Stabilität des Polyetheramids wurde in der TGA erst ab 400°C ein Gewichtsverlust deutlich. Bei der DSC betrug die Glasübergangstemperatur 227°C, die mit einem Unterschied in der spezifischen Wärmekapazität von 0,14 J/(g•K) auf einen hohen amorphen Anteil deutet. Entsprechend klein ist die Schmelzwärme von 15,8 J/g des Schmelzpeaks bei 318°C gewesen.

**2)** Entsprechend gemäß Herstellungsbeispiel 1 hergestelltes und getrocknetes rieselfähiges Pulver ($[\eta]$ = 372 cm³/g) wurde mit einer Hochtemperaturpresse zu Platten von 6 cm Durchmesser und 1 mm Dicke verpreßt.

Der Einfluß der Preßtemperatur auf die mechanischen Eigenschaften im Bereich 320 bis 350°C zeigt Tabelle 1, die Bedingungen des Pressens betrugen jeweils 5 Minuten bei 2,5 t.

Tabelle 1

| T/°C | SS MPa | DSS % | RF MPa | RD % |
|------|--------|-------|--------|------|
| 320 | 89,0 | 9,5 | 87,6 | 15,3 |
| 330 | 89,5 | 10,0 | 88,0 | 12,2 |
| 340 | 94,1 | 10,4 | 82,5 | 14,2 |
| 350 | 92,7 | 9,4 | 88,8 | 9,5 |

Der Anfangsmodul einer bei 320°C verpreßten Platte betrug 3,6 GPa, einer bei 350°C verpreßten Platte 3,9 GPa.

**3)** Beispiel 1 wurde wiederholt und die Kondensation beim Erreichen definierter Viskositäten mit 1,874 g Benzoylchlorid (entsprechend 3 mol-%) abgestoppt und so die Molmasse begrenzt. Das erhaltene Pulver wurde wie in Beispiel 2 zu Platten verpreßt.

Den Einfluß der Molmasse (Staudingerindex $[\eta]$) auf die mechanischen Eigenschaften von bei 330°C verpreßten Platten zeigt Tabelle 2, gepreßt wurde jeweils 5 Minuten bei 2,5 t.

Tabelle 2

| $[\eta]$ (cm³/g) | SS MPa | DSS % | RF MPa | RD % |
|------------------|--------|-------|--------|------|
| 333 | 88,3 | 10,4 | 105,9 | 24,9 |
| 282 | 87,5 | 10,8 | 91,4 | 25,0 |
| 275 | 87,5 | 10,5 | 86,0 | 27,0 |
| 241 | 88,0 | 10,7 | 87,3 | 19,3 |
| 213 | - | - | 87,9 | 8,9 |
| 151 | - | - | 76,7 | 4,7 |

Im TSV zeigte eine entsprechend gepreßte Platte aus Polyetheramid mit $[\eta]$ = 275 cm³/g eine Glasübergangstemperatur von 230°C.

**4)** Das rieselfähige und getrocknete Pulver entsprechend Beispiel 1 wurde mit einem Extruder unter Verwendung einer Schnecke mit 20 mm Durchmesser und 420 mm Länge bei 53 U/min und einer Massetemperatur von 375°C durch eine 1 mm Düse zu einem Draht geformt.

Die mechanischen Eigenschaften des unverstreckten Drahtes mit Titer 15500 dtex betrugen 12 cN/tex Reißfestigkeit und 15 % Reißdehnung.

**Patentansprüche**

**1.** Verfahren zur Herstellung eines Formkörpers aus einem thermoplastisch verarbeitbaren aromatischen Polyetheramid mit einer Schmelztemperatur im Bereich von 300 bis 350 °C, bei dem die Struktur aus den wiederkehrenden Einheiten der Formeln

-CO-Ar-CO-     (A)

6

und

-NH-Ar-O-Ar-X-Ar-O-Ar-NH-     (B)

besteht, worin Ar einen zweiwertigen aromatischen Rest mit 6 C-Atomen, der unsubstituiert oder substituiert ist, bedeutet, dessen Bindungen in p-Stellung stehen und X eine 2,2-Propylidenbindung darstellt, einen Staudingerindex $[\eta]$ im Bereich von 50 bis 400 cm$^3$/g (gemessen in N-Methyl-pyrrolidon bei 25 °C) und eine Glasübergangstemperatur von über 200°C aufweist, dadurch gekennzeichnet, daß die Formgebung aus einer Schmelze erfolgt.

2.  Verfahren nach Anspruch 1, dadurch gekennzeichnet, daß die Formgebung durch Extrudieren, Verpressen oder Spritzgießen der trockenen, pulverförmigen Polyetheramide erfolgt.

3.  Verfahren nach Anspruch 1, dadurch gekennzeichnet, daß der aromatische Rest Ar mit bis zu 2 Alkyl- oder Alkoxyresten mit 1 bis 4 Kohlenstoffatomen im Alkylrest oder mit Halogen, vorzugsweise Chlor, substituiert ist.

## Claims

1.  A process for the production of a molded article from a thermoplastically processible aromatic polyetheramide in which the structure comprises the repeating units of the formulae

-CO-Ar-CO-     (A)

and

-NH-Ar-O-Ar-X-Ar-O-Ar-NH-     (B)

in which Ar signifies a bivalent unsubstituted or substituted aromatic radical having 6 carbon atoms, and whose linkages are in the p-position and X denotes a 2,2-propylidene linkage, the polyetheramide has a melting point in the range from 300 to 350°C, an intrinsic viscosity $[\eta]$ in the range from 50 to 400 cm$^3$/g (measured at 25°C in N-methylpyrrolidone) and a glass transition temperature of above 200°C, which comprises performing the shaping from a melt.

2.  The process as claimed in claim 1, wherein the shaping is performed by extrusion, press-molding or injection molding of the dry polyetheramides in powder form.

3.  The process as claimed in claim 1, wherein the aromatic radical Ar is substituted by up to 2 alkyl or alkoxy radicals having 1 to 4 carbon atoms in the alkyl radical or is substituted by halogen, preferably chlorine.

## Revendications

1.  Procédé pour la préparation d'un objet moulé en un polyétheramide aromatique que l'on peut traiter par voie thermoplastique ayant une température de fusion comprise entre 300 et 350°C, dont la structure se compose d'unités récurrentes de formules :

-CO-Ar-CO-     (A)

et

-NH-Ar-O-Ar-X-Ar-O-Ar-NH-     (B)

dans lesquelles Ar représente un radical aromatique bivalent avec 6 atomes de carbone, qui est non substitué ou substitué, dont les liaisons sont en position p, et X représente une liaison 2,2-propylidène, qui présente un indice de Staudinger $[\eta]$ dans le domaine de 50 à 400 cm$^3$/g (mesuré dans la N-méthyl-pyrrolidone à 25°C) et une température de transition vitreuse supérieure à 200°C, caractérisé en ce qu'on effectue le moulage d'une matière fondue.

2.  Procédé selon la revendication 1, caractérisé en ce qu'on effectue le moulage par extrusion, par compression ou un moulage par injection des polyétheramides pulvérulents secs.

3.  Procédé selon la revendication 1, caractérisé en ce que le radical aromatique Ar est substitué par jusqu'à 2 radicaux alkyle ou alcoxy comportant de 1 à 4 atomes de carbone dans le radical alkyle ou par halogène, de préférence le chlore.